# EUROPEAN PATENT APPLICATION

(11) **EP 2 592 544 A1**
(43) Date of publication of application: **15.05.2013**
(21) Application number: 12177527.4
(22) Date of filing: 23.07.2012
(51) Int. Cl.: G06F 3/14, G09G 5/00, H04W 52/02, G06F 1/32

(54) **Display apparatus and control method thereof**

(30) Priority: 09.11.2011 KR 20110116338
(71) Applicant: Samsung Electronics Co., Ltd., Suwon-si, Gyeonggi-do, 443-742 (KR)
(72) Inventor: Choi, Hoon, Gyeonggi-do (KR); Kim, Kwang-youn, Gyeonggi-do (KR)
(74) Representative: Hewett, Jonathan Michael Richard

(57) **Abstract**

Exemplary embodiments include a wireless transmitter and wireless receiver. The wireless transmitter and wireless receiver wirelessly transmit and receive data, respectively. The wireless transmitter and the wireless receiver each include a controller which outputs a power mode changing control signal to a power supply unit and a communication unit in response to a wakeup event, wherein the power supply unit changes a power mode from a standby mode to a normal mode in response to the power mode changing control signal. Both the wireless transmitter and receiver include a transmitter which transmits the power mode changing control signal to the other. With this configuration, there are provided an apparatus and a control method thereof which enable a wireless transmission of multimedia and consumes minimal power when in a standby mode.

## Description

The present invention relates to a display apparatus and a control method thereof, and more particularly, to a wireless display apparatus and a control method thereof which has a plurality of elements separated from each other and communicating with each other in a wireless manner.

A display apparatus processes an image signal, which is provided by an input source, for display and provides an image for a user to view the image. The display apparatus may vary including a TV, a monitor, and a portable media player (PMP).

With the development of wireless transmission technology, a wireless display apparatus in which a plurality of elements is separately provided and transmits various data in a wireless manner has been marketed. Such wireless display apparatus does not need a cable for connecting the elements and may be useful from the perspective of space management and appearance.

However, the wireless transmission apparatus should transmit large multimedia images wirelessly and thus occasionally needs a large amount of power.

Accordingly, one or more exemplary embodiments of the present invention provide a display apparatus and a control method thereof which enables a wireless transmission of multimedia and consumes minimal power when in a standby mode.

According to an aspect of exemplary embodiments, there is provided a display apparatus which includes an input unit and a screen, the display apparatus including: the screen including a first communication unit which wirelessly communicates with the input unit; and a first controller which outputs a power mode changing control signal to the input unit through the first communication unit upon occurrence of a wakeup event; and the input unit including a second communication unit which wirelessly communicates with the first communication unit; and a second controller which changes a power mode of the input unit from a standby mode to a normal mode upon receiving the power mode changing control signal from the first communication unit by the second communication unit.

The first controller may change the power mode of the screen from the standby mode to the normal mode upon occurrence of the wakeup event.

The screen may further include a command receiver which receives a user's command, and the wakeup event may occur when a user's command is transmitted by at least one from among the first communication unit and the command receiver.

The command receiver may include at least one from among a key input unit including a plurality of buttons, an infrared (IR) receiver receiving an IR signal from an IR remote controller, and a camera taking an image of a user.

The screen may include a first power supply unit which includes a first main power source and a first sub power source, and the input unit may include a second power supply unit which includes a second main power source and a second sub power source.

The first power supply unit may supply power to the first communication unit, the first controller and the command receiver through the first sub power source in the standby mode.

The screen may further include an image receiver which wirelessly receives an image from the input unit; and a display unit which displays a received image thereon, and the first power supply unit may supply power to the first communication unit, the first controller, the command receiver, the image receiver and the display unit through the first main power source in the normal mode.

The first and second communication units may include a Bluetooth communication module.

The screen may include a first pairing information storage unit to store therein information on an external device permitting a pairing operation with the Bluetooth communication module of the first communication unit and information on an external device rejecting the pairing operation, and the input unit may include a second pairing information storage unit to store therein information on an external device permitting a pairing operation with the Bluetooth communication module of the second communication unit and information on an external device rejecting the pairing operation, and the first and second controllers may selectively perform the pairing operation with the external device according to the information stored in the first and second pairing information storage units.

The foregoing and/or other aspects may be achieved by providing a display apparatus which includes an input unit and a screen, the display apparatus including: the input unit including a second communication unit which wirelessly communicates with the screen; and a second controller which outputs a power mode changing control signal to the screen through the second communication unit upon occurrence of a wakeup event, and the screen including a first communication unit which wirelessly communicates with the second communication unit; and a first controller which changes a power mode of the screen from a standby mode to a normal mode upon receiving the power mode changing control signal from the second communication unit by the first communication unit.

The second controller may change the power mode of the input unit from the standby mode to the normal mode upon occurrence of the wakeup event.

The input unit may further include a connector which is connected to an external image source to receive an image therefrom, and the wakeup event may occur when the connector is connected to the external image source.

The screen may include a first power supply unit which includes a first main power source and a first sub power source, and the input unit may include a second power supply unit which includes a second main power source and a second sub power source.

The second power supply unit may supply power to the second communication unit, the second controller, and the connector through the second sub power source in the standby mode.

The input unit may further include an image processor which processes a received image, and an image transmitter which wirelessly transmits the image, which has been processed by the image processor, to the screen, and the second power supply unit may supply power to the second communication unit, the second controller, the connector, the image processor and the image transmitter through the second main power source in the normal mode.

The first and second communication units may include a Bluetooth communication module.

The screen may include a first pairing information storage unit to store therein information on an external device permitting a pairing operation with the Bluetooth communication module of the first communication unit and information on an external device rejecting the pairing operation, and the input unit may include a second pairing information storage unit to store therein information on an external device permitting a pairing operation with the Bluetooth communication module of the second communication unit and information on an external device rejecting the pairing operation, and the first and second controllers may selectively perform the pairing operation with the external device according to the information stored in the first and second pairing information storage units.

The foregoing and/or other aspects may be achieved by providing a control method of a display apparatus which includes an input unit and a screen communicating wirelessly, the control method including: detecting a wakeup event in one from among the input unit and the screen; outputting a power mode changing control signal from one from among the input unit and the screen detecting the wakeup event to the other one from among the input unit and the screen; and changing a power mode of one from among the input unit and the screen receiving the power mode changing control signal from a standby mode to a normal mode.

The control method may further include changing the power mode of one from among the input unit and the screen detecting the wakeup event from the standby mode to the normal mode.

The detecting the wakeup event may include receiving a user's command from the outside.

The detecting the wakeup event may include connecting an external image source.

The screen and the input unit may include a power supply unit, respectively, including a main power source and a sub power source, and the power supply units may supply power to the screen and the input unit, respectively, through the sub power source in the standby mode and through the main power source in the normal mode.

The power mode changing control signal may be transmitted and received by a Bluetooth communication module which is provided in the screen and the input unit, respectively.

The foregoing and/or other aspects may be achieved by providing an apparatus which wirelessly transmits images, the apparatus including: a communication unit which wirelessly transmits data; a power supply unit; a controller which outputs a power mode changing control signal to the power supply unit and the communication unit in response to a wakeup event, wherein the power supply unit changes a power mode from a standby mode to a normal mode in response to the power mode changing control signal, and wherein the communication unit transmits the power mode changing control signal. The apparatus may consume less power in the standby mode than in the normal mode.

The foregoing and/or other aspects may be achieved by providing an apparatus which wirelessly receives images, the apparatus including: a communication unit which wirelessly transmits and receives data; a power supply unit; a controller which outputs a power mode changing control signal to the power supply unit and the communication unit in response to a wakeup event, wherein the power supply unit changes a power mode from a standby mode to a normal mode in response to the power mode changing control signal, wherein the communication unit transmits the power mode changing control signal. The apparatus may consume less power in the standby mode than in the normal mode.

The above and/or other aspects will become apparent and more readily appreciated from the following description of exemplary embodiments, taken in conjunction with the accompanying drawings, in which:
FIG. 1 illustrates a wireless display apparatus according to an exemplary embodiment;
FIG. 2 is a control block diagram of a display apparatus according to an exemplary embodiment;
FIG. 3 illustrates a process of transmitting a power mode changing control signal according to a first exemplary embodiment in which a wakeup event is detected;
FIG. 4 illustrates a process of transmitting a power mode changing control signal according to a second exemplary embodiment in which a wakeup event is detected; and
FIG. 5 is a control flowchart of the display apparatus according to an exemplary embodiment.

Below, exemplary embodiments will be described in detail with reference to accompanying drawings so as to be easily realized by a person having ordinary knowledge in the art. The present invention may be embodied in various forms without being limited to the exemplary embodiments set forth herein. Descriptions of well-known parts are omitted for clarity, and like reference numerals refer to like elements throughout.

Exemplary embodiments are described which include an input unit and a screen. As one of ordinary skill in the art will recognize, however, other exemplary embodiments that do not include a screen (e.g. set-top box, video transmitter, video receiver, etc.) may exist which do not depart from the invention.

Exemplary embodiments are described which include Bluetooth communication and wireless communication through a wireless LAN. As one of ordinary skill in the art will recognize, however, other exemplary embodiments may use any wireless communication method or standard without departing from the invention.

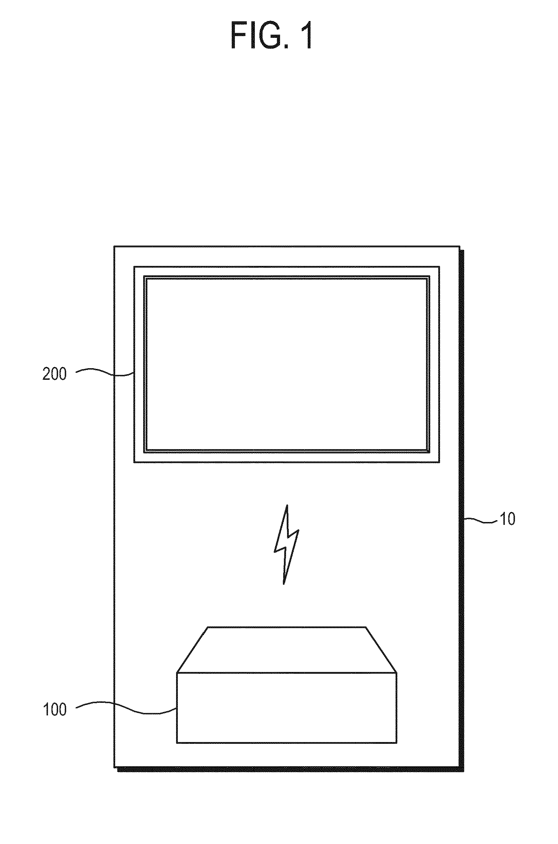

FIG. 1 illustrates a display apparatus 10 according to an exemplary embodiment.

As shown therein, the display apparatus 10 includes an input unit 100 and a screen 200, which are separated from each other physically. In general, the input unit 100 receives and encodes an image signal into a transport stream to transmit the image signal to the screen 200 through a wireless LAN. The screen 200 may output the received image signal through a display unit 260. However, known internal elements of the display apparatus 10 may be included anywhere in the input unit 100 or the screen 200, and there will be no limitation in executing the present exemplary embodiment.

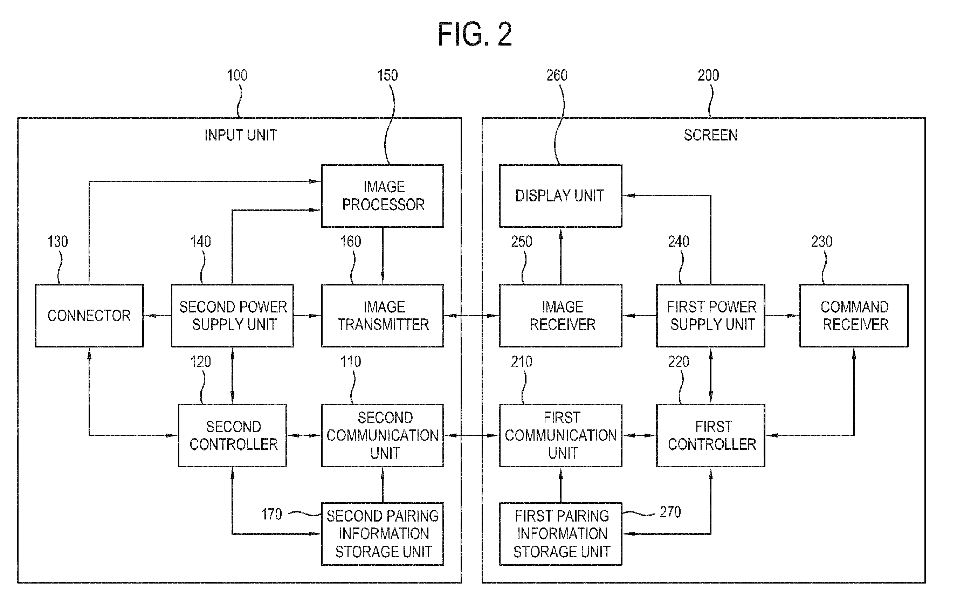

FIG. 2 is a control block diagram of the display apparatus 10 according to an exemplary embodiment.

As shown therein, the screen 200 may include a first communication unit 210 and a first controller 220. The screen 200 may further include a command receiver 230, a first power supply unit 240, an image receiver 250 and a display unit 260. The input unit 100 may include a second communication unit 110, and a second controller 120. The input unit 100 may further include a connector 130, a second power supply unit 140, an image processor 150 and an image transmitter 160. The display apparatus 10 according to the present exemplary embodiment may include, without limitation, a wireless TV which receives from an external source, and displays, an image signal.

Hereinafter, a first exemplary embodiment in which the screen 200 detects a wakeup event will be described.

The first communication unit 210 of the screen 200 wirelessly communicates with the second communication unit 110 of the input unit 100. The first and second communication units 210 and 110 may include a Bluetooth communication module, and transmit and receive various signals therebetween through the Bluetooth communication module after performing a general pairing process. Signals which are transmitted and received between the first and second communication units 210 and 110 may include a power mode changing control signal (to be described later). The first and second communication units 210 and 110 may also receive signals from other external devices, and e.g., may receive a user's command from an external Bluetooth input device, and the first communication unit 210 may receive and transmit a sync signal with 3D shutter glasses worn by a user.

The first and second controllers 220 and 120 perform general control operations for the screen 200 and the input unit 100, respectively. The first and second controllers 220 and 120 may include a microcomputer (MiCOM). The first controller 220 monitors occurrence/non-occurrence of a wakeup event, and upon occurrence thereof, outputs a power mode changing control signal to the second communication unit 110 of the input unit 100 through the first communication unit 210.

Upon receiving the power mode changing control signal from the first communication unit 210 through the second communication unit 110, a power mode of the input unit 100 changes from a standby mode to a normal mode by a control of the second controller 120.

In the standby mode, the second communication unit 110 and the second controller 120 of the input unit 100 may receive second sub power (to be described later) and receive a power mode changing control signal while other elements of the input unit 100 may not receive power. If the power mode of the input unit 100 is changed to the normal mode by a control of the second controller 120, all of elements of the input unit 100 receive power by a second main power source which will be described later.

Upon occurrence of a wakeup event, the first controller 220 may change the power mode of the screen 200 from a standby mode to a normal mode. In the standby mode, the first communication unit 210 and the first controller 220 of the screen 200 may receive first sub power (to be described later), detect the wakeup event and transmit a power mode changing control signal while other elements of the screen 200 may not receive power. If the power mode of the screen 200 is changed to the normal mode by a control of the first controller 220, all of elements of the screen 200 receive power from a first main power source which will be described later.

In the present exemplary embodiment, the screen 200 may further include a command receiver 230 to receive a user's command. The command receiver 230 may include at least one from among a key input unit which includes a plurality of buttons, an infrared (IR) receiver which receives an IR signal from an IR remote controller, and a camera which takes an image of a user. In this case, in the standby mode, the command receiver 230 may receive power from the first sub power source and receive a user's command, and the wakeup event according to the first exemplary embodiment may occur when the first communication unit 210 or the command receiver 230 receives a user's command. In the present exemplary embodiment, the screen 200 includes the command receiver 230, but not limited thereto. Alternatively, the input unit 100 may include the command receiver 230 and this does not limit the execution of the exemplary embodiment.

The screen 200 may include a first power supply unit 240 which includes a first main power source and a first sub power source. The input unit 100 may include a second power supply unit 140 which includes a second main power source and a second sub power source. In a standby mode, power is supplied to particular elements of the screen 200 through the first sub power source and power is supplied to particular elements of the input unit 100 through the second sub power source. In a normal mode, power is supplied to all of elements of the screen 200 through the first main power source and power is supplied to all of elements of the input unit 100 through the second main power source.

The screen 200 may further include an image receiver 250 which wirelessly receives an image from the image transmitter 160 (to be described later) of the input unit 100. The image receiver 250 may receive and transmit large multimedia images from/to the image transmitter 160 through a wireless LAN.

The screen 200 may further include a display unit 260 which displays thereon an image that is transmitted by the image receiver 250. The display unit 260 may display an image through a flat display panel such as a liquid crystal display (LCD) panel or a plasma display panel (PDP).

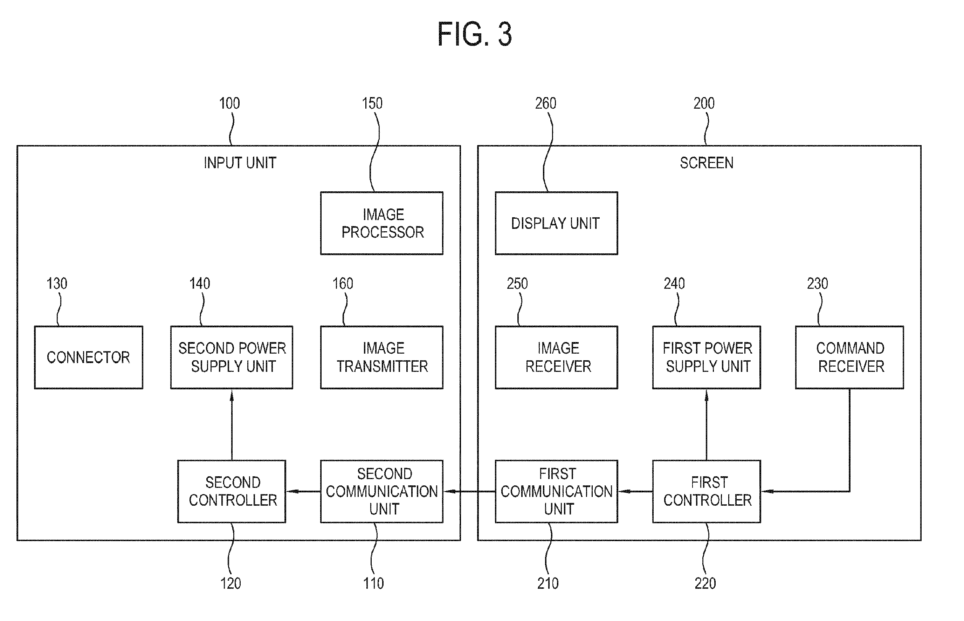

A process of transmitting a power mode changing control signal according to the first exemplary embodiment will be described with reference to FIG. 3. Upon occurrence of a wakeup event by receiving a user's input command through the command receiver 230 in a standby mode, the first controller 220 transmits a power mode changing control signal to the first communication unit 210, and the first communication unit 210 transmits the signal to the second communication unit 110 through Bluetooth communication. Upon receiving the power mode changing control signal through the second communication unit 110, the second controller 120 controls the second power supply unit 140 to supply power to all of elements of the input unit 100 through the second main power source. In this case, the first controller 220 may control the first power supply unit 240 to supply power to all of elements of the screen 200 through the first main power source.

Hereinafter, a second exemplary embodiment in which a wakeup event is detected in the input unit 100 will be described. Elements and functions according to the present exemplary embodiment which are the same as those according to the first exemplary embodiment will not described again.

The second communication unit 110 of the input unit 100 wirelessly communicates with the first communication unit 210 of the screen 200. The first and second communication units 210 and 110 may include a Bluetooth communication module, and receive and transmit various signals through the Bluetooth communication module after performing a normal pairing process.

The second controller 120 monitors occurrence/non-occurrence of a wakeup event, and upon occurrence thereof, outputs a power mode changing control signal to the first communication unit 210 of the screen 200 through the second communication unit 110.

Upon receiving a power mode changing control signal from the second communication unit 110 through the first communication unit 210, a power mode of the screen 200 changes from a standby mode to a normal mode by a control of the first controller 220.

In the standby mode, the first communication unit 210 and the first controller 220 of the screen 200 may receive first sub power (to be described later) and receives a power mode changing control signal while other elements of the screen 200 may not receive power. If the power mode of the screen 200 is changed to the normal mode by a control of the first controller 220, all of elements of the screen 200 receive power by a first main power source which will be described later.

Upon occurrence of a wakeup event, the second controller 120 may change the power mode of the input unit 100 from a standby mode to a normal mode. In the standby mode, the second communication unit 110 and the second controller 120 of the input unit 100 may receive second sub power (to be described later), detect a wakeup event and transmit a power mode changing control signal while other elements of the input unit 100 may not receive power. If the power mode of the input unit 100 is changed to the normal mode by a control of the second controller 120, all of elements of the input unit 100 receive power from a second main power source which will be described later.

In the second exemplary embodiment, the input unit 100 may further include a connector 130 which is connected to an external image source and receive an image therefrom. The connector 130 may include an interface such as a radio frequency (RF) module receiving an RF signal and a component to receive an analog signal, or include an interface such as a high definition multimedia interface (HDMI) or RS232 to receive a digital signal. In the second exemplary embodiment, the wakeup event may occur when the connector 130 is connected to an external image source. In the present exemplary embodiment, the input unit 100 includes the connector 130, but is not limited thereto. Alternatively, the screen 200 may include the connector 130 and this does not limit the execution of the present exemplary embodiment.

The screen 200 may include a first power supply unit 240 which includes a first main power source and a first sub power source, and the input unit 100 may include a second power supply unit 140 which includes a second main power source and a second sub power source. In a standby mode, power is supplied to particular elements of the screen 200 through the first sub power source and power is supplied to particular elements of the input unit 100 through the second sub power source. In a normal mode, power is supplied to all of elements of the screen 200 through the first main power source and power is supplied to all of elements of the input unit 100 through the second main power source.

The input unit 100 may further include an image processor 150 to process a received image. The image processing operation of the image processor 150 may include, e.g., decoding, deinterlacing, scaling, analog-digital converting operations and the like.

The input unit 100 may further include an image transmitter 160 which wirelessly transmits an image, which has been processed by the image processor 150, to the image receiver 250 of the screen 200. The image transmitter 160 may transmit large multimedia images to the image receiver 250 through a wireless LAN.

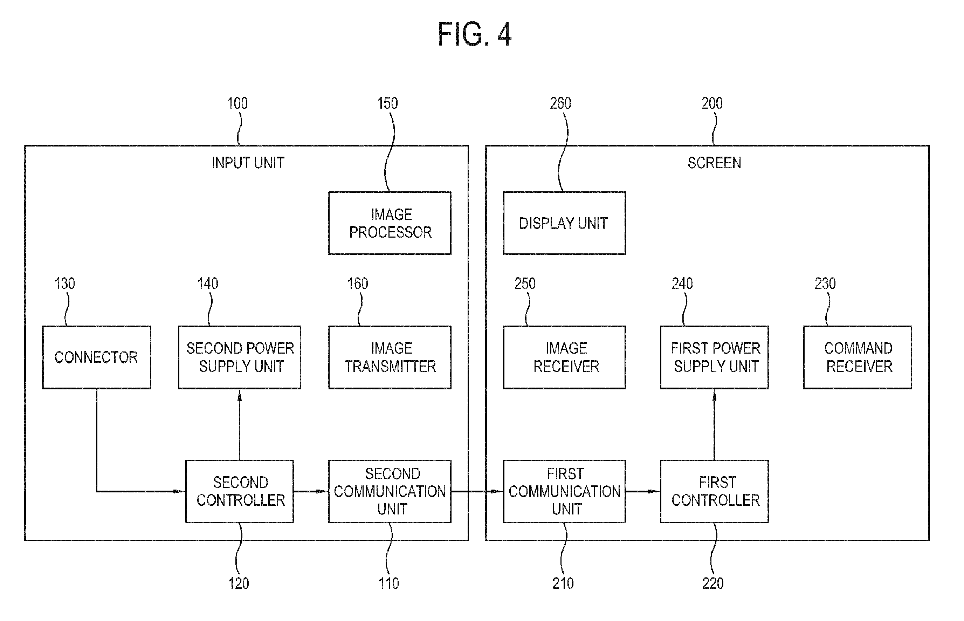

A process of transmitting a power mode changing control signal according to the second exemplary embodiment will be described with reference to FIG. 4. Upon occurrence of a wakeup event by connecting the connector 130 to an external image source in a standby mode, the second controller 120 transmits a power mode changing control signal to the second communication unit 110, and the second communication unit 110 transmits the signal to the first communication unit 210 of the screen 200 through the Bluetooth communication. Upon receiving the power mode changing control signal through the first communication unit 210, the first controller 220 controls the first power supply unit 240 to supply power to all of elements of the screen 200 through the first main power source. In this case, the second controller 120 may control the second power supply unit 140 to supply power to all of elements of the input unit 100 through the second main power source.

According to the foregoing first and second exemplary embodiments, in the standby mode, only certain elements such as the first communication unit 210 and the first controller 220 of the screen 200 and the second communication unit 110 and the second controller 120 of the input unit 100 receives sub power and the wireless display apparatus may consume minimum standby power.

The display apparatus 10 according to the first and second exemplary embodiments may include the first and second communication units 210 and 110 including the Bluetooth communication module, which performs a pairing operation with an external Bluetooth input device or 3D glasses for wireless communication through Bluetooth. In performing the pairing operation between the external device and the display apparatus 10, a user may be confused in performing the pairing operation with either the first communication unit 210 or the second communication unit 110.

In the display apparatus 10 according to the present exemplary embodiment, the screen 200 and the input unit 100 may include a first pairing information storage unit 270 and a second pairing information storage unit 170, respectively, to store therein information on an external device permitting a pairing operation with the Bluetooth communication module of the first communication unit 210 or the second communication unit 110 and information on an external device rejecting the pairing operation. The first and second controllers 220 and 120 may selectively perform the pairing operation with the external device according to the information stored in the first pairing information storage unit 270 or the second pairing information storage unit 170.

For example, in the case of 3D shutter glasses, a sync signal may be received through Bluetooth communication to synchronize a 3D image displayed on the display unit 260 of the screen 200 with the 3D glasses. In this case, the 3D glasses may pair with the first communication unit 210 of the screen 200. Then, a user may store the information on the 3D glasses as an external device permitting the pairing operation with the first communication unit 210 in the first pairing information storage unit 270, and store information on the 3D glasses as an external device rejecting the pairing operation with the second communication unit 110 in the second pairing information storage unit 170. If the 3D glasses navigate a peripheral device and require an authentication number to pair with the display apparatus 10, the first communication unit 210 may respond to the request and transmit the authentication number to pair with the 3D glasses according to the stored information while the second communication unit 110 does not respond to the request.

As a result, the external device selectively performs the pairing operation with the first communication unit 210 or the second communication unit 110 of the display apparatus 100 and this ensures user's convenience.

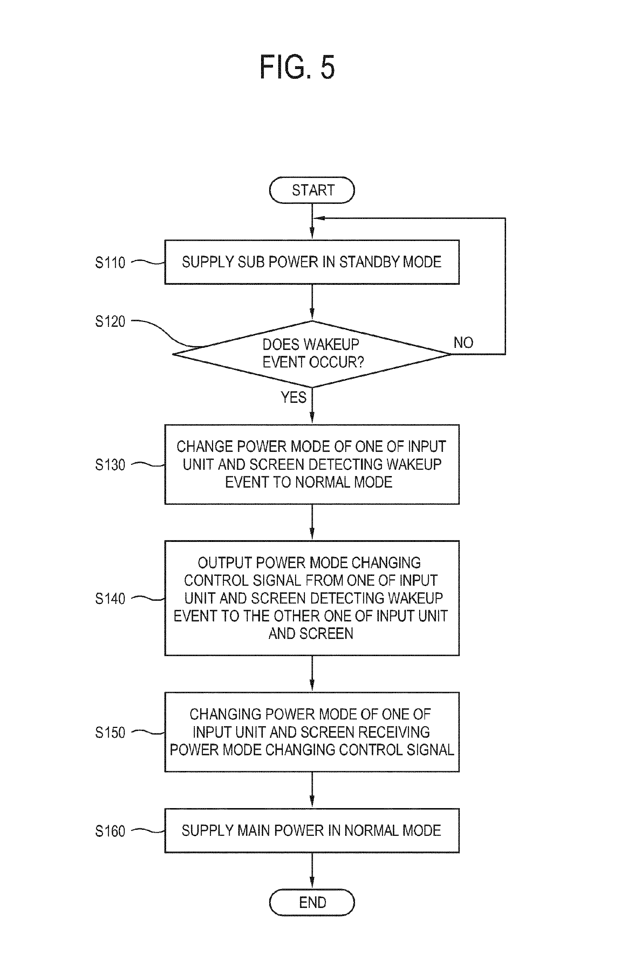

FIG. 5 is a control flowchart of the display apparatus 10 according to an exemplary embodiment.

The display apparatus 10 includes the input unit 100 and the screen 200 which are separated from each other, transmit or receive large multimedia image and transmit and receive various control signals through wireless communication between the input unit 100 and the screen 200.

The display apparatus 10 supplies power through the sub power source in the standby mode (S110). Upon detecting the wakeup event which has occurred from one from among the input unit 100 and the screen 200 (S120), the one from among the input unit 100 and the screen 200 which detects the wakeup event outputs the power mode changing control signal to the other one of the input unit 100 and the screen 200 (S140). The power mode changing control signal is wirelessly transmitted through Bluetooth communication.

The other one from among the input unit 100 and the screen 200 which receives the power mode changing control signal changes the power mode from the standby mode to the normal mode (S150). If the power mode is changed to the normal mode, power is supplied to all of elements of the display apparatus 10 through the main power source in the normal mode (S160).

The display apparatus 10 may further include an operation of changing the power mode of the input unit 100 or the screen 200 detecting the wakeup mode from the standby mode to the normal mode (S130).

As in the first exemplary embodiment, the wakeup event may occur when a user's command is received from the outside. The user's command may be input through the key input unit of the display apparatus 10 or a camera, or received through an IR signal of the IR remote controller.

As in the second exemplary embodiment, the wakeup event may occur when an external image source is connected to the display apparatus 10. The display apparatus 10 may include a plurality of interfaces to receive an analog or digital signal. If an external image source is connected to the display apparatus 10, the power mode changing control signal may be output to change the power mode from the standby mode to the normal mode.

The screen 200 and the input unit 100 may include a power supply unit, respectively, which includes a main power source and a sub power source. The power supply units may supply power to the screen 200 and the input unit 100 through the sub power source in the standby mode, and through the main power source in the normal mode. In the standby mode, sub power is supplied to only the elements which perform a function of receiving an external command and a function of detecting a connection with an external image source. If the power mode is changed to the normal mode by the power mode changing control signal, power is supplied to all of elements of the display apparatus 10 through the main power source.

According to the control method of the display apparatus 10 according to the present exemplary embodiment, consumption of standby power in a standby mode of the wireless display apparatus in which the input unit 100 and the screen 200 are separated may be minimized.

As described above, a display apparatus and a control method thereof according to exemplary embodiments enable a wireless transmission of large multimedia and consume minimum standby power like an existing display apparatus.

Although a few exemplary embodiments have been shown and described, it will be appreciated by those skilled in the art that changes may be made in these exemplary embodiments without departing from the invention.

While not restricted thereto, an exemplary embodiment can be embodied as computer-readable code on a computer-readable recording medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network-coupled computer systems so that the computer-readable code is stored and executed in a distributed fashion. Also, an exemplary embodiment may be written as a computer program transmitted over a computer-readable transmission medium, such as a carrier wave, and received and implemented in general-use or special-purpose digital computers that execute the programs. Moreover, one or more units of the image processing apparatus 200 or 300 can include a processor or microprocessor executing a computer program stored in a computer-readable medium.

## Claims

1. A display apparatus which comprises an input unit and a screen, the display apparatus comprising:
the screen comprising a first communication unit which wirelessly communicates with the input unit; and a first controller which outputs a power mode changing control signal to the input unit through the first communication unit upon occurrence of a wakeup event; and
the input unit comprising a second communication unit which wirelessly communicates with the first communication unit; and a second controller which changes a power mode of the input unit from a standby mode to a normal mode upon receiving the power mode changing control signal from the first communication unit by the second communication unit.

2. The display apparatus according to claim 1, wherein the first controller changes the power mode of the screen from the standby mode to the normal mode upon occurrence of the wakeup event.

3. The display apparatus according to claim 2, wherein the screen further comprises a command receiver which receives a user's command, and the wakeup event occurs when a user's command is transmitted by at least one from among the first communication unit and the command receiver.

4. The display apparatus according to claim 3, wherein the command receiver comprises at least one from among a key input unit comprising a plurality of buttons, an infrared (IR) receiver receiving an IR signal from an IR remote controller, and a camera taking an image of a user.

5. The display apparatus according to claim 4, wherein the screen comprises a first power supply unit which comprises a first main power source and a first sub power source, and the input unit comprises a second power supply unit which comprises a second main power source and a second sub power source.

6. The display apparatus according to claim 5, wherein the first power supply unit supplies power to the first communication unit, the first controller and the command receiver through the first sub power source in the standby mode.

7. The display apparatus according to claim 6, wherein the screen further comprises an image receiver which wirelessly receives an image from the input unit; and a display unit which displays a received image thereon, and the first power supply unit supplies power to the first communication unit, the first controller, the command receiver, the image receiver and the display unit through the first main power source in the normal mode.

8. The display apparatus according to claim 1, wherein the first and second communication units comprise a Bluetooth communication module.

9. The display apparatus according to claim 8, wherein the screen comprises a first pairing information storage unit to store therein information on an external device permitting a pairing operation with the Bluetooth communication module of the first communication unit and information on an external device rejecting the pairing operation, and the input unit comprises a second pairing information storage unit to store therein information on an external device permitting a pairing operation with the Bluetooth communication module of the second communication unit and information on an external device rejecting the pairing operation, and the first and second controllers selectively perform the pairing operation with the external device according to the information stored in the first and second pairing information storage units.

10. A control method of a display apparatus which comprises an input unit and a screen communicating wirelessly, the control method comprising:
detecting a wakeup event in one from among the input unit and the screen;
outputting a power mode changing control signal from one from among the input unit and the screen detecting the wakeup event to the other one from among the input unit and the screen; and
changing a power mode of one from among the input unit and the screen receiving the power mode changing control signal from a standby mode to a normal mode.

11. The control method according to claim 10, further comprising changing the power mode of one from among the input unit and the screen detecting the wakeup event from the standby mode to the normal mode.

12. The control method according to claim 11, wherein the detecting the wakeup event comprises receiving a user's command from the outside.

13. The control method according to claim 11, wherein the detecting the wakeup event comprises connecting an external image source.

14. The control method according to claim 10, wherein the screen and the input unit comprise a power supply unit, respectively, comprising a main power source and a sub power source, and the power supply units supply power to the screen and the input unit, respectively, through the sub power source in the standby mode and through the main power source in the normal mode.

15. The control method according to claim 10, wherein the power mode changing control signal is transmitted and received by a Bluetooth communication module which is provided in the screen and the input unit, respectively.
